# EUROPEAN PATENT SPECIFICATION

(11) **EP 2 619 071 B1**
(45) Date of publication and mention of the grant of the patent: **10.06.2015**
(21) Application number: 11797342.0
(22) Date of filing: 20.09.2011
(51) Int. Cl.: B62D 33/06

(54) **IMPROVEMENTS TO THE REAR SUSPENSION UNIT OF A VEHICLE CABIN, ESPECIALLY OF AN INDUSTRIAL OR COMMERCIAL VEHICLE**
VERBESSERUNGEN AN DER HECKAUFHÄNGUNGSEINHEIT EINER FAHRZEUGKABINE, INSBESONDERE EINES INDUSTRIE- ODER NUTZFAHRZEUGS
PERFECTIONNEMENTS APPORTÉS À L'UNITÉ DE SUSPENSION ARRIÈRE D'UNE CABINE DE VÉHICULE, EN PARTICULIER D'UN VÉHICULE INDUSTRIEL OU COMMERCIAL

(30) Priority: 21.09.2010 EP 10425309
(43) Date of publication of application: 31.07.2013
(73) Proprietor: Iveco S.p.A., 10156 Torino (IT)
(72) Inventor: ZOGNO, Stefano, I-10015 Ivrea (IT)
(74) Representative: Franzolin, Luigi
(86) International application number: PCT/IB2011/054111
(87) International publication number: WO 2012/038888

(56) References cited:
- EP-A1- 0 273 796
- US-A1- 2002 153 183
- US-A1- 2003 089 541
- US-A1- 2003 226 700

## Description

### Application field of the invention

The present invention belongs to the field of the manufacturing of suspensions for industrial and/or commercial vehicles. In particular the present invention relates to a rear suspension unit of a cabin of an industrial or commercial vehicle. The present invention relates also to a vehicle comprising such suspension unit.

An example of prior art is given in US2003/226700.

### Description of the prior art

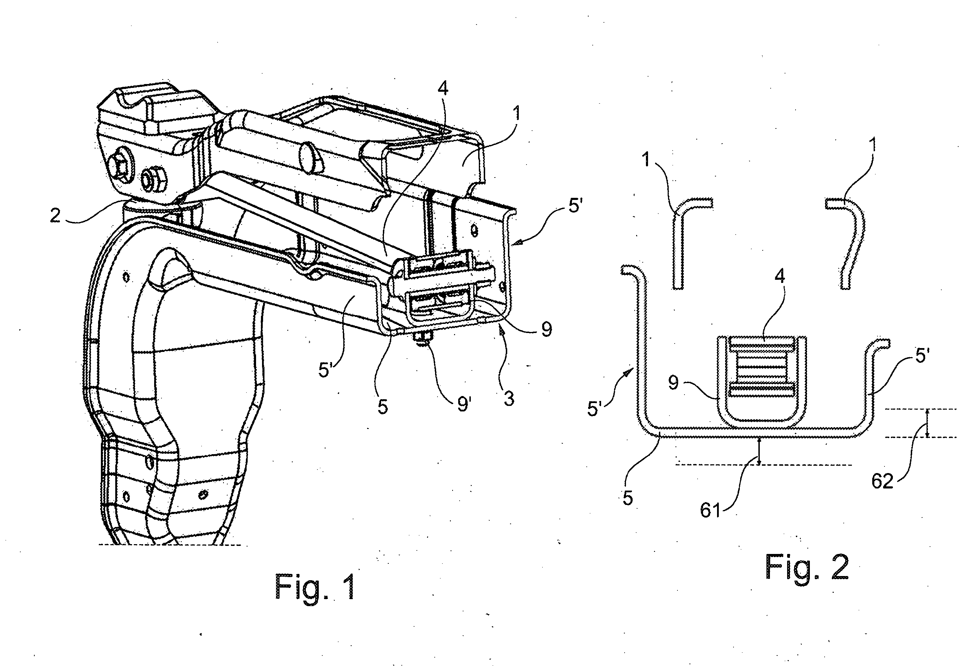

Figures 1 and 2 show a rear suspension unit of a cabin of an industrial vehicle of the type known in the art. With reference to said figures, such suspension unit comprises an upper reinforcement cross member 1 connected to the lower edge of the back of the cabin (not shown in the figures) by means of a cabin anchorage lock. The upper cross member 1 is connected by a pair of shock absorbers 2 to a lower support unit which is fixed to the chassis. More precisely such lower support unit comprises a lower cross member 3 to whose ends two vertical supports constrained to the side members of the vehicle frame are connected. The two cross members 1, 3 and the two shock absorbers 2 form the so called "quadrilateral of the cabin rear suspensions".

With reference again to figures 1 and 2, the suspension unit comprises also a containment and calibration bar 4 which is connected between the two cross members 1, 3 in order to constrain/control the oscillations of the cabin.

The lower cross member 3 is made in a single piece and has a reversed omega-shaped cross section defined by a horizontal part 5 from which two lateral walls 5' develop vertically, facing one another.

The containment bar 4 is housed within the section of the lower cross member 3, namely between the lateral walls 5'. The upper cross member oscillates within the section of the lower cross member, namely between the lateral walls 5' themselves. A lower support 9 is placed within the section of the lower cross member for the connection of the containment and calibration bar 4. More precisely such bar 4 is connected, by means of a first articulated joint, to the upper cross member 1 and, by means of a second articulated joint, to the lower support 9 rigidly connected in its turn to the horizontal part 5.

Such support 9 is fixed on the horizontal part 5, in a substantially central position between the lateral walls 5', by means of connection means 9' which emerge below the horizontal part 5 (see figure 1). The engine unit of the vehicle is operatively arranged under the lower cross member 3, comprising various components whose number and whose overall dimensions are constantly increasing.

Given the configuration of the lower cross member 3 and given the overall dimensions of the engine unit (not shown), it is necessary to ensure the presence of a double safety clearance in order to avoid collisions: a first clearance(indicated by reference 61) has to be provided under the horizontal part 5 of the lower cross member against the engine unit's vibrations, while a second clearance (indicated by reference 62) has to be provided over the horizontal part 5 against the oscillations of the upper cross member connected to the cabin (see dotted lines and arrows in Figure 2).

It is thus necessary to increase the space available for the engine unit, modifying as less as possible the other parts of the vehicle, for example those relating to the cabin. Therefore the solution of raising the cabin in order to increase the space available for the engine is not applicable, since a new design of the cabin would be too expensive.

### Summary of the invention

Therefore the aim of the present invention is to provide improvements to the rear suspension unit of a vehicle cabin, especially of industrial or commercial vehicles, suitable for overcoming all the drawbacks mentioned above.

The subject of the present invention is a rear suspension unit of vehicle cabin, especially of industrial or commercial vehicle, comprising: an upper cross member connected to the lower edge of the back of the cabin; a lower cross member, connected to the vehicle frame by means of vertical supports; one or more shock absorbers and at least a containment bar between said cross members, characterized in that said lower cross member comprises a first lateral part 10 and a second lateral part physically separated and reciprocally spaced out in order to define an oscillation space so that the lower cross member can oscillate between said lateral parts.

The present invention relates also to further improvements to the rear suspension unit of a vehicle cabin, especially of an industrial or commercial vehicle, as described more fully in the dependent claims, which are an integral part of this description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
- figures 1 and 2 show a part of the cabin suspension unit of the type known in the art, respectively according to a perspective view and to a cross section view;
- figure 3 shows a perspective view of a cabin suspension unit according to the present invention;
- figure 4 shows an exploded view of the cabin suspension unit of figure 3;
- figure 5 shows a perspective view according to the section plane V of figure 3;
- figures 6, 7, 8, 9 show sections of the cabin suspension unit of Fig. 3.

The same reference numbers in the figures identify the same elements or components.

### Detailed description of the invention

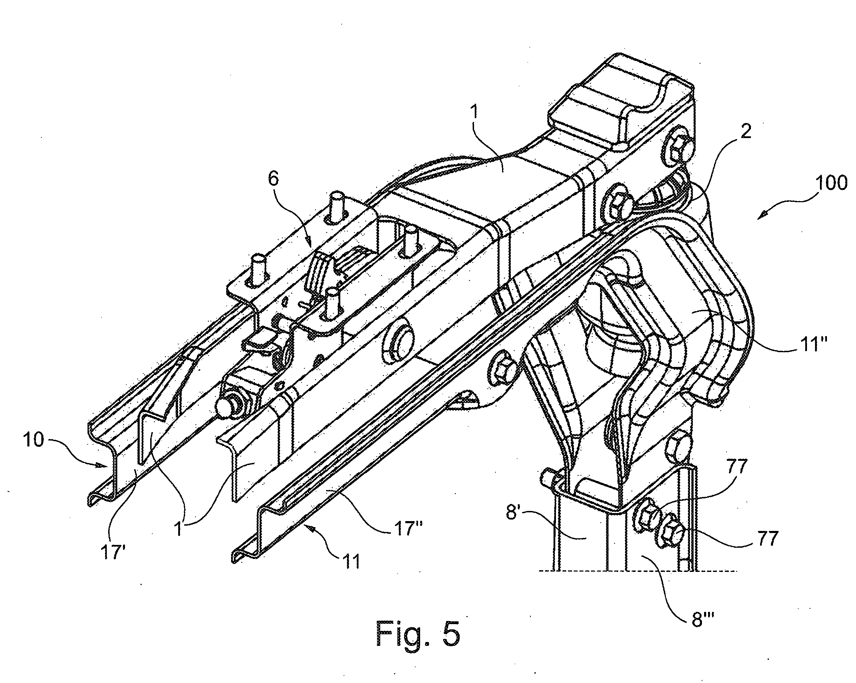

With reference to figures from 3 to 9, the present invention relates to a rear suspension unit of a cabin of an industrial or commercial vehicle, which will be indicated in the following as "suspension unit 100". According to the present invention, the suspension unit 100 comprises an upper reinforcement cross member 1 connected to the lower edge of the back of the cabin (not shown in the figures) by means of a cabin anchorage lock 6 shown in particular in Figure 5. The back of the cabin and the lock 6 are substantially unchanged with respect to the solutions known in the art.

The suspension unit 100 further comprises a lower support sub-unit, firmly fixed to the frame. Such lower sub-unit comprises a lower cross member and a pair of vertical supports 7, 8 to which the lower cross member is connected. Each one of the vertical supports 7, 8 is rigidly connected to the vehicle frame and in particular to one of the side members (not shown) on the vehicle. It is this connection that makes the lower sub-unit "connected to the frame" of the vehicle.

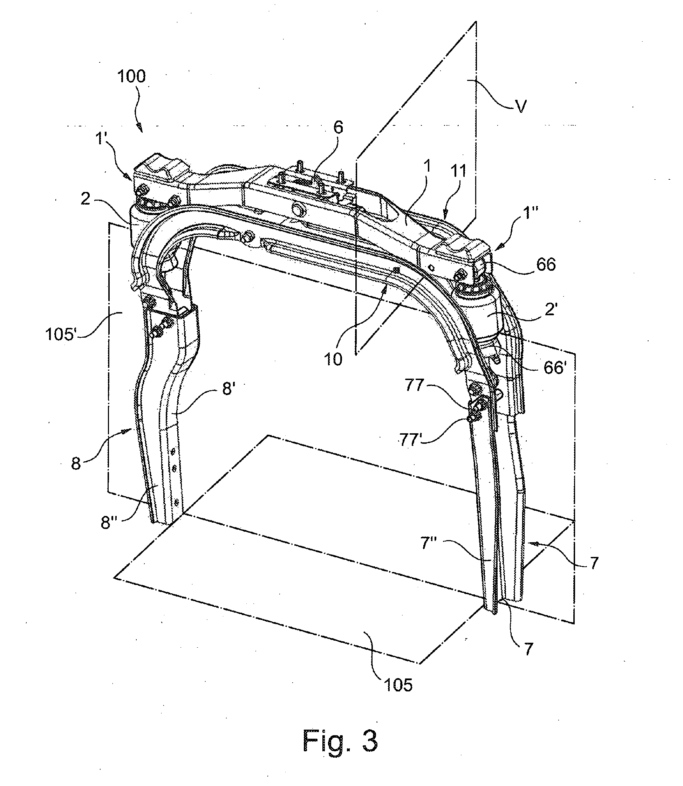

The vertical supports 7, 8 of the lower support sub-group develop vertically with respect to a first substantially horizontal reference plane 105 (indicated in Figure 3) defined by the side members to which they are connected. In particular the two front supports are connected so that they face each other lying on a second vertical reference plane 105' (shown in Figure 3 as well) orthogonal with respect to the first reference plane 105.

The upper cross member 1 is connected to the lower sub-unit by means of two shock absorbers 2, 2'. In particular, for each one of the two shock absorbers 2, 2' a first end is connected to a corresponding end 1', 1", while a second end, opposite to the first one, is connected to a corresponding connection area between the lower cross member and the two vertical supports 7, 8 constrained to the side members of the frame.

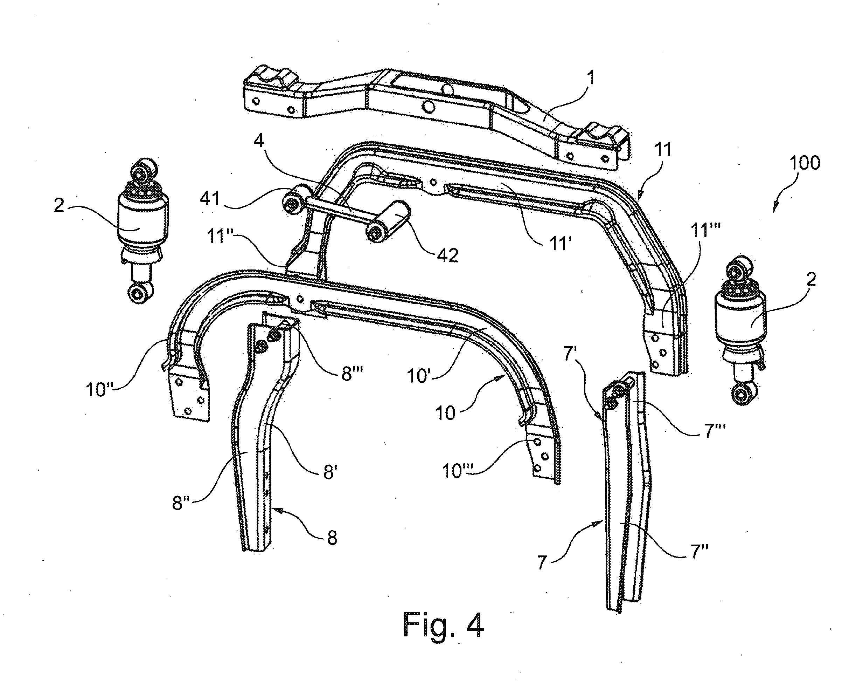

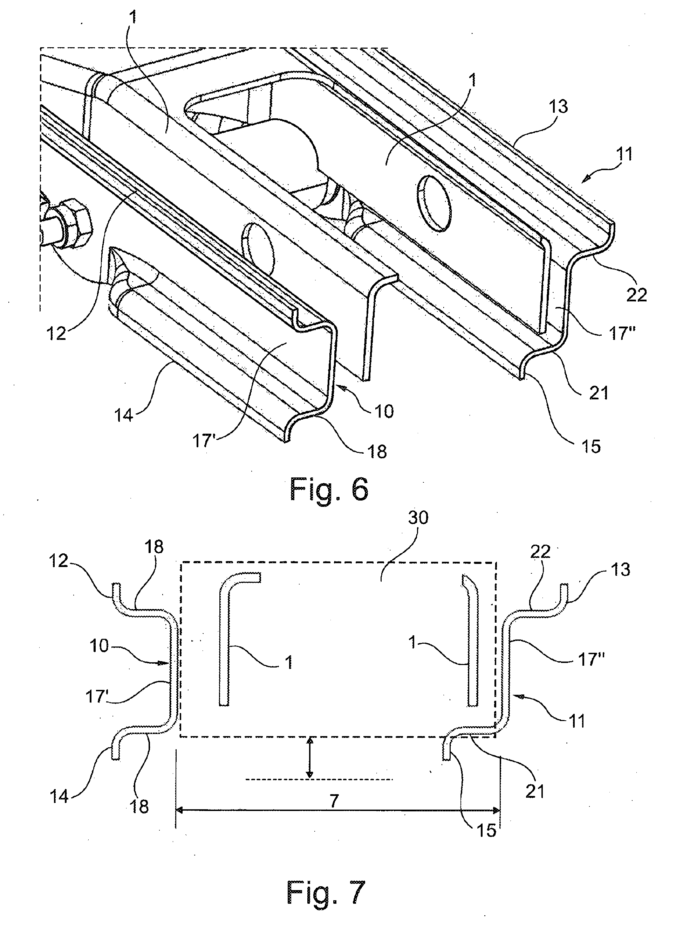

With particular reference to the exploded view of Figure 4, according to the present invention, the lower cross member comprises a first lateral part and a second lateral part 11 that are physically separated and reciprocally spaced out. In particular, the distance 7 (indicated in figure 7) between the two parts 10, 11 defining the lower cross member is such that it allows the upper cross member 1 to oscillate between the parts 10, 11 themselves. In other words, the two lateral parts 10, 11 are spaced out in order to define an oscillation space 30 (indicated by the dotted line in figure 7) for the oscillation of the upper cross member 1. For the purposes of the present invention, the expression "physically separated lateral parts 10, 11" means two parts that are structurally distinct and not connected by any connection portion.

The suspension unit 100 according to the present invention further comprises a containment and calibration bar (in the following simply indicated as "bar 4"). Such bar 4 is hinged to the upper cross member 1 by means of a first articulated joint 41 and to the parts 10, 11 of the lower cross member by means of a second articulated joint 42.

The configuration of the lower cross member in two lateral parts 10, 11 has various advantages, the first of which corresponds to the removal of the central part and of the central support (elements indicated respectively by reference 5 and 9 in Figures 1 and 2) usually provided in the traditional structures in order to connect the bar to the lower cross member. In other words, according to the invention, the lower cross member has an "open" configuration both in the upper and in the lower part, namely it is formed only by the two physically separated and opposite lateral parts 10, 11 , defining between each other the oscillation space 30 used by the upper cross member 1.

It has been observed that using a lower cross member having two separate parts 10, 11 advantageously, raises "the level" of the lower cross member with respect, for example, to the horizontal reference plane 105. This results in an advantageous increase of the space available below for the engine unit. Thus it can be observed that, compared to the known solution shown in figures 1 and 2, the present invention allows to free the space previously occupied by the central part 5 and by the connection means 9' of the central support 9. Advantageously such space can be used to take up the thrusts caused by vibrations/oscillations of the engine unit.

In this regard, it can be observed that, by using the lower cross member defined by two physically separated and spaced out lateral parts 10, 11, only one safety clearance is necessary instead of the two that were necessary in the known solutions (see Figure 2). In particular, by means of the present invention, the lower oscillation limit of the upper cross member advantageously corresponds to the oscillation limit of the engine. This aspect results in a simplified design and thus in a simplified manufacturing and assembling of the suspension unit 100.

It can be observed that, compared to the traditional solution which uses a lower cross member made in a single piece, using a lower cross member formed by two physically separated parts 10, 11 is very advantageous also in terms of manufacturing. Indeed the first part 10 and the second part 11 may easily be obtained by moulding, and after that they may be easily connected to the flanks of the vertical supports 7, 8 according to the following way.

With reference in particular to figures 4 and 5, the first part 10 of the lower cross member has a substantially C-shaped configuration defined by a central portion 10', by a first end portion 10" and by a second end portion 10"' folded with respect to the central portion 10'. Similarly, also the second part 11 of the lower cross member has a substantially C-shaped configuration defined by a central portion 11', by a first end portion 11" and by a second end portion 11'" folded with respect to the central portion 11'. It can be observed that the two lateral parts 10, 11 of the first lower cross member develop vertically, namely parallel to a plane parallel to the second reference plane 105 indicated above.

Each one of the end portions 10" , 10"', 11", 11"' of the two parts 10, 11 of the lower cross member is connected to one of the vertical supports 7, 8. According to a preferred embodiment, each one of the vertical supports 7, 8 is defined by a profile having a substantially U-shaped cross section, as it can be seen in the exploded view of Figure 4.

More precisely, the first vertical support 8 has a central portion 8' from which a first flank 8" and a second flank 8"' parallel to the first one develop. Similarly, also the second vertical support 7 has a central portion 7' from which a first flank 7" and a third flank 7"' develop. The first end portion 10" of the first part 10 of the lower cross member is connected to a first flank 8" of the first support 8, while the second end 10"' of the same first part 10 is connected to the first flank 7" of the second support 7. Similarly, the first end 11" of the second part 11 of the lower cross member is connected to a second flank 8"' of the first support 8, while the second end 11"' of the same second part 11 is connected to the second flank 7"' of the second support 7.

It can be observed that the connection of the ends 10", 10"', 11", 11"' to the respective flanks 8", 8"', 7", 7"' of the vertical supports 7, 8 is made preferably by means of screw connection means, comprising preferably bolted joints 77, 77'. The section view in figure 5 allows to observe the operating position of the bolted joints 77, 77'. With reference in particular to figures 6 and 7, the first lateral part 10 of the lower cross member has a substantially reversed U-shaped cross section. More precisely such cross section is evaluated according to a plane orthogonal to the first reference plane 105 and orthogonal to the second reference plane 105'.

In particular such section is defined by a first plane surface 17', developing vertically, from which two parallel ribs 18 project, each one of them ending with a reinforcement folding 12, 14. More precisely such parallel ribs 18 project outwards with respect to the space comprised between the two parts 10, 11 of the lower cross member.

The second part 11 of the lower cross member has, on the contrary, a cross section (evaluated as before according to a plane orthogonal to the first reference plane 105 and orthogonal to the second reference plane 105') defined by a second plane surface 17" from which a first rib 21 and a second rib 22 develop according to opposite directions. In particular the first rib 21 develops perpendicularly to the second plane surface 17" in direction of the first part 10 of the cross section, while the second rib 22 develops perpendicularly to the second plane surface 17", but outwards with respect to the space comprised between the two parts 10, 11. The edge 15 of the first rib 21 is folded downwards (namely towards the space for housing the engine unit), while the edge of the second rib 22 is folded upwards (namely towards the space to be occupied by the cabin).

It has been observed that the particular cross section assigned to the two lateral parts 10, 11 allows to achieve a remarkable mechanical resistance without making the suspension heavier. The particular cross section assigned to the two lateral parts 10, 11 allows on the one hand to obtain an excellent mechanical performance and on the other end to limit advantageously manufacturing and assembling costs. With reference again to Figure 7 it can be observed that the first plane surface of the first lateral part 10 and the second plane surface 17" of the second lateral part 11 define the oscillation space 30 within which the first cross member 1 is free to oscillate. At this regard, it can be observed that the first rib 21 of the second part 11 defines a limit for the oscillation of the upper cross member 1, substantially forming a limit stop surface for the oscillation of the upper cross member itself. Thus, advantageously, in case of strong oscillations, a possible contact between the upper cross member 1 and the engine unit below the lower cross member is avoided. The first rib 21 substantially defines the lower oscillation limit of the upper cross member.

In this regard, as indicated in figure 7, a clearance 61 is provided between the lower cross member and the engine unit, in anticipation of the oscillation of the engine unit. As shown in the figure, the rib 21 of the second part defines also the upper oscillation limit of the engine unit.

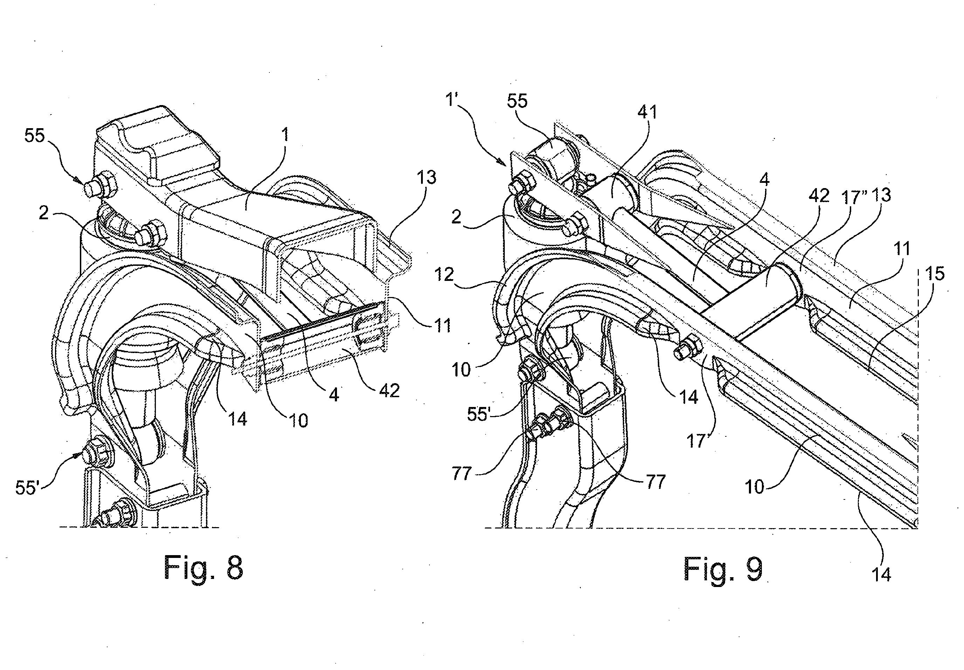

Figures 8 and 9 allow to observe in detail the connection of the bar 4 according to what indicated above. In particular it can be observed that the second articulated joint 42 is advantageously hinged to the first plane surface 17' of the first part 10 and to the second plane surface 17" of the second part 11. It has been observed that this solution allows a higher torsion resistance and a higher stability than the technical solution shown in figures 1 and 2.

With reference again to figure 8, it can be further observed that, according to a preferred embodiment, each one of the two shock absorbers 2, 2' comprises a first end 55 connected to the upper cross member 1 and a second end 55' connected to corresponding ends of the parts 10, 11 of the lower cross member. In particular, it can be observed that a first end 55 of the first shock absorber 2 is connected to the upper cross member 1 in proximity of a first end portion 1', while the second end 55' is connected to the first end portion 10" of the first part 10 and, at the same time, to the first end 11' of the second part 11. Similarly, a first end 66 of the second shock absorber 2" is connected to the upper cross member 1 in proximity of a second end portion 1", while the second end 66' is connected to the second end portion 10"' of the first part 10 and, at the same time, to the second end 11"' of the second part 11 of the lower cross member (see figures 3 and 8).

As indicated above, the lower ends 55', 66' of the shock absorbers 2, 2' are thus advantageously connected in proximity of the connection area between the parts 10, 11 of the lower cross member and the two vertical supports 7, 8. This condition on the one hand allows the stresses to discharge immediately on the vertical supports 7, 8 and on the other hand it facilitates the assembling operations.

The suspension unit 100 according to the present invention fulfils fully the tasks and the purposes set forth above. In particular, the configuration of the lower cross member in two physically distinct parts allows to advantageously have more space for positioning the engine unit and for limit the oscillation of the engine unit itself. At the same time, a lower cross member with this configuration is more easily manufactured and assembled with the rest of the components of the suspension unit.

In practice, the material used and also the dimensions and the shapes may be any, according to the needs and to the state of the art.

## Claims

1. Rear suspension unit (100) of vehicle cabin, especially of industrial or commercial vehicle, comprising:
- an upper cross member (1) connected to the lower edge of the back of the cabin;
- a lower cross member, connected to the vehicle frame by means of vertical supports (7,8);
- one or more shock absorbers (2);
- at least a containment and calibration bar (4) connected to said upper cross member and to said lower cross member;
**characterized in that** said lower cross member comprises a first lateral part (10) and a second lateral part (11) physically separated and reciprocally spaced out, whereby the two lateral parts are structurally distinct and not connected by any connection part, in order to define an oscillation space (30) for the oscillation of said upper cross member.

2. Rear suspension unit (100) according to claim 1, wherein said at least a containment and calibration bar (4) is hinged to said upper cross member (1) by means of a first articulated joint (41) and to said two lateral parts (10, 11) of said lower cross member by means of a second articulated joint (42).

3. Suspension unit (100) according to claim 1 or 2, wherein said first lateral part (10) of said lower cross member has a cross section defined by a first plane surface (17') with a substantially vertical development, from which two parallel ribs (18) develop, each one of them ending with a reinforcement folding (12, 14), said ribs (18) developing outwards with respect to said oscillation space (30) defined by said lateral parts (10, 11) of said lower cross member.

4. Suspension unit (100) according to any of the claims from 1 to 3, wherein said second part (11) of said lower cross member has a cross section defined by a second plane surface (17") from which a first rib (21) and a second rib (22) develop according to opposite direction, said first rib (21) developing perpendicularly to said second plane surface (17") towards said first lateral part (10) of said lower cross member, said second rib (22) of said second lateral part (11) developing outwards with respect to said oscillation space (30).

5. Suspension unit (100) according to claim 4, wherein said first rib (21) defines a limit stop surface for the oscillation of said lower cross member in said oscillation space.

6. Suspension unit (100) according to any of the claims from 1 to 5, wherein:
- said first lateral part (10) of said lower cross member has a substantially C-shaped configuration defined by a central portion (10'), by a first end portion (10") and by a second end portion (10"') folded with respect to the central portion (10').
- said second lateral part (11) of said lower cross member has a substantially C-shaped configuration defined by a central portion (11'), by a first end portion (11") and by a second end portion (11"') folded with respect to the central portion (10').

7. Suspension unit (100) according to claim 6, wherein said unit comprises:
- a first vertical support (8) defined by a profile with a substantially U-shaped section, said first vertical support (8) comprising a central portion (8') from which a first flank (8") and a second flank (8"') develop;
- a second vertical support (7) defined by a profile with a substantially U-shaped section, said second vertical support (7) comprising a central portion (7') from which a first flank (7') and a second flank (7") develop; and wherein:
- said first end portion (10") and said second end portion (10"') of said first lateral part of said lower cross member are connected respectively to said first flank (8") of said first support (8) and to said first flank (7") of said second support,
- said first end portion (11") and said second end portion (11"') of said second lateral part (11) of said lower cross member are connected respectively to said second flank (8"') of said first support (8) and to said second flank (7"') of said second support (7).

8. Suspension unit (100) according to claim 6 or 7, wherein said suspension unit comprises a first shock absorber (2) and a second shock absorber (2') and wherein:
- a first end (55) of said first shock absorber (2) is connected to said upper cross member (1) in proximity of a first end portion (1'), while a second end (55') is connected to said first end portion (10") of said first part (10) and, at the same time, to said first end (11") of said second part (11);
- a first end (66) of said second shock absorber (2') is connected to said upper cross member (1) in proximity of a second end portion (1"), while the second end (66') is connected to second end (10"') of said first part (10) and to said second end (11"') of said second part (11) of said lower cross member.

9. Lower cross member for a rear suspension unit of a cabin according to any of the previous claims, **characterized in that** it comprises a first lateral part (10) and a second lateral part (11) physically separated and reciprocally spaced out, whereby the two lateral parts are structurally distinct and not connected by any connection part, in order to define an oscillation space (30) for the oscillation of an upper cross member of said rear suspension unit.

10. Vehicle comprising a cabin rear suspension unit according to any of the previous claims from 1 to 8.

## Patentansprüche

1. Hintere Aufhängungseinheit (100) einer Fahrzeugkabine, insbesondere eines gewerblichen oder kommerziellen Fahrzeugs, welche Folgendes aufweist:
- ein oberes Querglied (1), welches mit der unteren Kante des Hinterteils der Kabine verbunden ist;
- ein unteres Querglied, welches mit dem Fahrzeugrahmen mittels vertikaler Träger (7, 8) verbunden ist;
- einen oder mehrere Stoßaufnehmer (2);
- zumindest eine Halte- und Kalibrierungsstange (4), die mit dem oberen Querglied und mit dem unteren Querglied verbunden ist;
**dadurch gekennzeichnet, dass** das untere Querglied einen ersten seitlichen Teil (10) und einen zweiten seitlichen Teil (11) aufweist, die physisch getrennt und gegenseitig beabstandet sind, wodurch die zwei seitlichen Teile strukturell getrennt sind und nicht durch irgendein Verbindungsteil verbunden sind, um einen Schwingungsfreiraum (30) für die Schwingung des oberen Quergliedes zu definieren.

2. Hintere Aufhängungseinheit (100) nach Anspruch 1, wobei die mindestens eine Halte- und Kalibrierungsstange (4) über Scharniere mit dem oberen Querglied (1) mittels einer ersten Gelenkverbindung (41) verbunden ist, und mit den zwei seitlichen Teilen (10, 11) des unteren Quergliedes mittels einer zweiten Gelenkverbindung (42) verbunden ist.

3. Aufhängungseinheit (100) nach Anspruch 1 oder 2, wobei der erste seitliche Teil (10) des unteren Quergliedes einen Querschnitt hat, der durch eine erste Ebenenfläche (17') mit einer im Wesentlichen vertikalen Erstreckung definiert wird, von wo sich zwei parallele Rippen (18) erstrecken, wobei jede von diesen mit einer Verstärkungsbiegung (12, 14) endet, wobei die Rippen (18) sich nach außen bezüglich des Schwingungsfreiraumes (30) erstrecken, der von den seitlichen Teilen (10, 11) des unteren Quergliedes definiert wird.

4. Aufhängungseinheit (100) nach einem der Ansprüche 1 bis 3, wobei der zweite Teil (11) des unteren Quergliedes einen Querschnitt hat, der durch eine zweite Ebenenfläche (17") definiert wird, von der sich eine erste Rippe (21) und eine zweite Rippe (22) entsprechend in entgegengesetzte Richtungen erstrecken, wobei die erste Rippe (21) sich senkrecht zu der zweiten Ebenenfläche (17") zu dem ersten seitlichen Teil (10) des unteren Quergliedes erstreckt, wobei die zweite Rippe (22) des zweiten seitlichen Teils (11) sich nach außen bezüglich des Schwingungsfreiraumes (30) erstreckt.

5. Aufhängungseinheit (100) nach Anspruch 4, wobei die erste Rippe (21) eine Begrenzungsanschlagfläche für die Schwingung des unteren Quergliedes in dem Schwingungsfreiraum definiert.

6. Aufhängungseinheit (100) nach einem der Ansprüche 1 bis 5, wobei
- der erste seitliche Teil (10) des unteren Quergliedes eine im Allgemeinen C-förmige Konfiguration hat, die durch einen mittigen Teil (10'), durch einen ersten Endteil (10") und einen zweiten Endteil (10'") definiert wird, die bezüglich des mittigen Teils (10') gebogen sind,
- wobei der zweite seitliche Teil (11) des unteren Quergliedes eine im Allgemeinen C-förmige Konfiguration hat, die durch einen mittigen Teil (11'), durch einen ersten Endteile (11 ") und einen zweiten Endteil (11"') definiert wird, die bezüglich des mittigen Teils (10') gebogen sind.

7. Aufhängungseinheit (100) nach Anspruch 6, wobei die Einheit Folgendes aufweist:
- einen ersten vertikalen Träger (8), der durch ein Profil mit einem im Wesentlichen U-förmigen Querschnitt definiert wird, wobei der erste vertikale Träger (8) einen mittigen Teil (8') aufweist, von dem eine erste Flanke (8") und einer zweite Flanke (8"') verlaufen;
- einen zweiten vertikalen Träger (7), der durch ein Profil mit einem im Wesentlichen U-förmigen Querschnitt definiert wird, wobei der zweite vertikale Träger (7) einen mittigen Teil (7') aufweist, von dem sich eine erste Flanke (7') und eine zweite Flanke (7") erstrecken;
und wobei
- der erste Endteil (10") und der zweite Endteil (10'") des ersten seitlichen Teils des unteren Quergliedes jeweils mit der ersten Flanke (8") des ersten Trägers (8) und mit der ersten Flanke (7") des zweiten Trägers verbunden sind,
- wobei der erste Endteil (11 ") und der zweite Endteil (11"') des zweiten seitlichen Teils (11) des unteren Quergliedes jeweils mit der zweiten Flanke (8"') des ersten Trägers (8) und mit der zweiten Flanke (7"') des zweiten Trägers (7) verbunden sind.

8. Aufhängungseinheit (100) nach Anspruch 6 oder 7, wobei die Aufhängungseinheit einen ersten Stoßaufnehmer (2) und einen zweiten Stoßaufnehmer (2') aufweist, und wobei
- ein erstes Ende (55) des ersten Stoßaufnehmers (2) mit dem oberen Querglied (1) in der Nähe eines ersten Endteils (1') verbunden ist, während ein zweites Ende (55') mit dem ersten Endteil (10") des ersten Teils (10) und gleichzeitig mit dem ersten Ende (11 ") des zweiten Teils (11) verbunden ist;
- ein erstes Ende (66) des zweiten Stoßaufnehmers (2') mit dem oberen Querglied (1) in der Nähe des zweiten Endteils (1 ") verbunden ist, während das zweite Ende (66') mit dem zweiten Ende (10'") des ersten Teils (10) und mit dem zweiten Ende (11"') des zweiten Teils (11) des unteren Quergliedes verbunden ist.

9. Unteres Querglied für eine hintere Aufhängungseinheit einer Kabine nach einem der vorhergehenden Ansprüche, **dadurch gekennzeichnet, dass** es einen ersten seitlichen Teil (10) und einen zweiten seitlichen Teil (11) aufweist, die physisch getrennt und zueinander beabstandet sind, wodurch die zwei seitlichen Teile strukturell getrennt sind und nicht durch irgendein Verbindungsteil verbunden sind, um einen Schwingungsfreiraum (30) für die Schwingung eines oberen Quergliedes der hinteren Aufhängungseinheit zu definieren.

10. Fahrzeug, welches eine hintere Aufhängungseinheit für eine Kabine nach einem der vorhergehenden Ansprüche 1 bis 8 aufweist.

## Revendications

1. Unité de suspension arrière (100) de cabine de véhicule, en particulier de véhicule industriel ou commercial, comprenant :
- une traverse supérieure (1) reliée au bord inférieur de l'arrière de la cabine ;
- une traverse inférieure, reliée au châssis de véhicule à l'aide de supports verticaux (7, 8) ;
- un ou plusieurs amortisseurs (2) ;
- au moins une barre de confinement et d'étalonnage (4) reliée à ladite traverse supérieure et à ladite traverse inférieure ;
**caractérisée en ce que** ladite traverse inférieure comprend une première partie latérale (10) et une seconde partie latérale (11) physiquement séparées et réciproquement espacées, moyennant quoi les deux parties latérales sont structuralement distinctes et non reliées par une pièce de liaison, afin de délimiter un espace d'oscillation (30) pour l'oscillation de ladite traverse supérieure.

2. Unité de suspension arrière (100) selon la revendication 1, dans laquelle ladite au moins une barre de confinement et d'étalonnage (4) s'articule sur ladite traverse supérieure (1) à l'aide d'un premier raccord articulé (41) et sur lesdites deux parties latérales (10, 11) de ladite traverse inférieure à l'aide d'un second raccord articulé (42).

3. Unité de suspension (100) selon la revendication 1 ou 2, dans laquelle ladite première partie latérale (10) de ladite traverse inférieure présente une section transversale délimitée par une première surface plane (17') avec un développement sensiblement vertical, d'où deux nervures parallèles (18) se développent, chacune d'elles se terminant par un pliage de renforcement (12, 14), lesdites nervures (18) se développant vers l'extérieur par rapport audit espace d'oscillation (30) délimité par lesdites parties latérales (10, 11) de ladite traverse inférieure.

4. Unité de suspension (100) selon l'une quelconque des revendications 1 à 3, dans laquelle ladite seconde partie latérale (11) de ladite traverse inférieure présente une section transversale délimitée par une seconde surface plane (17") d'où une première nervure (21) et une seconde nervure (22) se développent selon une direction opposée, ladite première nervure (21) se développant perpendiculairement à ladite seconde surface plane (17") vers ladite première partie latérale (10) de ladite traverse inférieure, ladite seconde nervure (22) de ladite seconde partie latérale (11) se développant vers l'extérieur par rapport audit espace d'oscillation (30).

5. Unité de suspension (100) selon la revendication 4, dans laquelle ladite première nervure (21) délimite une surface d'arrêt de limite pour l'oscillation de ladite traverse inférieure dans ledit espace d'oscillation.

6. Unité de suspension (100) selon l'une quelconque des revendications 1 à 5, dans laquelle :
- ladite première partie latérale (10) de ladite traverse inférieure présente une configuration sensiblement en forme de C délimitée par une partie centrale (10'), par une première partie d'extrémité (10") et par une seconde partie d'extrémité (10"') pliées par rapport à la partie centrale (10'),
- ladite seconde partie latérale (11) de ladite traverse inférieure présente une configuration sensiblement en forme de C délimitée par une partie centrale (11'), par une première partie d'extrémité (11") et par une seconde partie d'extrémité (11"') pliées par rapport à la partie centrale (11').

7. Unité de suspension (100) selon la revendication 6, ladite unité comprenant :
- un premier support vertical (8) délimité par un profilé présentant une section sensiblement en forme de U, ledit premier support vertical (8) comprenant une partie centrale (8') d'où se développent un premier flanc (8") et un second flanc (8'") ;
- un second support vertical (7) délimité par un profilé présentant une section sensiblement en forme de U, ledit second support vertical (7) comprenant une partie centrale (7') d'où se développent un premier flanc (7") et un second flanc (7"') ;
et dans laquelle :
- ladite première partie d'extrémité (10") et ladite seconde partie d'extrémité (10"') de ladite première partie latérale de ladite traverse inférieure sont respectivement reliées audit premier flanc (8") dudit premier support (8) et audit premier flanc (7") dudit second support,
- ladite première partie d'extrémité (11") et ladite seconde partie d'extrémité (11"') de ladite seconde partie latérale de ladite traverse inférieure sont respectivement reliées audit second flanc (8"') dudit premier support (8) et audit second flanc (7"') dudit second support (7).

8. Unité de suspension (100) selon la revendication 6 ou 7, ladite de suspension comprenant un premier amortisseur (2) et un second amortisseur (2'), et dans laquelle :
- une première extrémité (55) dudit premier amortisseur (2) est reliée à ladite traverse supérieure (1) à proximité d'une première partie d'extrémité (1'), alors qu'une seconde extrémité (55') est reliée à ladite première partie d'extrémité (10") de ladite première partie (10) et, en même temps, à ladite première extrémité (11") de ladite seconde partie (11) ;
- une première extrémité (66) dudit second amortisseur (2') est reliée à ladite traverse supérieure (1) à proximité d'une seconde partie d'extrémité (1"), alors que la seconde extrémité (66') est reliée à ladite seconde extrémité (10"') de ladite première partie (10) et à ladite seconde extrémité (11"') de ladite seconde partie (11) de ladite traverse inférieure.

9. Traverse inférieure pour unité de suspension arrière d'une cabine selon l'une quelconque des revendications précédentes, **caractérisée en ce qu'**elle comprend une première partie latérale (10) et une seconde partie latérale (11) physiquement séparées et réciproquement espacées, moyennant quoi les deux parties latérales sont structuralement distinctes et non reliées par une pièce de liaison, afin de délimiter un espace d'oscillation (30) pour l'oscillation d'une traverse supérieure de ladite unité de suspension arrière.

10. Véhicule comprenant une unité de suspension arrière de cabine selon l'une quelconque des revendications précédentes 1 à 8.
